# FASCICULE DE BREVET EUROPEEN

(11) **EP 3 540 708 B1**
(45) Date de publication et mention de la délivrance du brevet: **15.09.2021**
(21) Numéro de dépôt: 19020072.5
(22) Date de dépôt: 14.02.2019
(51) Int. Cl.: G08C 17/02, H04B 1/08, H04L 29/06, H04M 9/00, H04W 88/04, H04W 88/06

(54) **DISPOSITIF D'INTERFACE POUR RADIO À TÉLÉCOMMANDE NUMÉRIQUE**
SCHNITTSTELLENVORRICHTUNG FÜR EIN RADIO MIT DIGITALER FERNSTEUERUNG
INTERFACE DEVICE FOR RADIO WITH DIGITAL REMOTE CONTROL

(30) Priorité: 13.03.2018 FR 1800212
(43) Date de publication de la demande: 18.09.2019
(73) Titulaire: État Français représenté par le Délégué Général pour l'Armement, 75509 Paris Cedex 15 (FR)
(72) Inventeur: Bersani, Pierre-Henri, 92160 Antony (FR)
(74) Mandataire: Cabinet Chaillot

(56) Documents cités:
- EP-A1- 0 182 707
- US-B1- 6 741 870

## Description

La présente invention concerne le domaine technique des transmissions de données par radio, plus particulièrement dans le domaine des radios embarquées sur des véhicules ou aéronefs.

La transmission de données par radio s'est imposée comme une nécessité. Différentes architectures ont été imaginées dans ce but.

Il existe d'une part des systèmes construits à partir d'une radio analogique, à laquelle est associé un dispositif de type modem de manière à permettre la transmission de données. Éventuellement, de manière à autoriser la communication voix, un sélecteur permet de connecter alternativement et exclusivement la radio au modem ou au dispositif de communication voix.

L'opérateur n'a alors pas d'information d'état sur le dispositif qui n'est pas connecté.

Le développement des outils numériques a provoqué l'abandon de ce type de solution, par ailleurs complexe à mettre en œuvre. Une autre génération de dispositifs est apparue, construits autour d'un calculateur et totalement numériques. Le problème de la transmission numérique par l'intermédiaire d'une radio analogique n'est donc pas présent pour ce type de dispositif et la fonction de modulation / démodulation numérique est directement intégrée dans le poste radio.

Ainsi, la généralisation des radios nativement capables de faire de la transmission de données a permis d'envisager la numérisation des échanges entre les véhicules ou aéronefs.

La numérisation consiste à équiper un matériel, véhicule ou aéronef :
- d'un système d'information, c'est-à-dire un logiciel s'exécutant sur un matériel informatique, et présentant à l'opérateur les informations de coordination et tactiques, généralement sur un fond cartographique,
- et d'un poste radio exploitable en transmission de données, permettant au système d'information d'échanger des mises à jour de ces informations.

La numérisation permet d'augmenter l'efficacité du matériel qui est numérisé, car elle permet à l'équipage de se positionner dans l'espace, de connaître la position des autres systèmes situés à proximité, de connaître et d'informer sur son déroulement de mission, et de recevoir en cours de mission des ordres, des comptes rendus, et des informations d'évolution de la situation générale.

Dans le cas particulier des aéronefs militaires, hélicoptères ou avions de combat ou de transport, les architectures mises en œuvre sont de deux types :
- soit l'aéronef, généralement de conception récente, possède un bus numérique. Dans ce cas, le poste radio est connecté au calculateur de l'avionique via une fonction de sélection, en cas nominal. Une boîte de commande, non utilisée en fonctionnement normal, prend la commande du poste radio lorsqu'elle est mise en marche, déconnectant le calculateur de l'avionique par la fonction de sélection. Dans ce type d'aéronef, la numérisation nécessite alors une refonte du logiciel de l'avionique.
- soit l'aéronef ne possède pas de bus numérique, ce qui est en général le cas des aéronefs de conception ancienne. Dans ce cas, le poste radio est directement relié à sa boîte de commande. Dans ce cas, la numérisation consiste à insérer une fonction de sélection sur la liaison entre le poste radio et sa boîte de commande, pour y connecter un ordinateur, ou calculateur, qui supportera l'application logicielle de numérisation.

Les dispositifs actuellement mis en œuvre sur les aéronefs présentent les inconvénients suivants :
- La mise en place du dispositif sur l'aéronef nécessite un chantier conséquent et notamment une reprise de câblage importante, conduisant à une longue immobilisation de l'aéronef. Sur les aéronefs d'ancienne génération, ces coûts et délais d'immobilisation sont directement préjudiciables au déploiement rapide et à grande échelle d'une solution de numérisation.
- Lorsque le poste radio est exploité par l'ordinateur, il n'y a plus de contrôle de visualisation de la connexion ni de l'état du poste radio par la boîte de commande, cette dernière étant électriquement déconnectée du poste radio. De fait, l'équipement peut apparaître à l'opérateur comme étant en défaut alors que le fonctionnement d'ensemble est normal par rapport à la conception. La place que l'équipement occupe dans le cockpit est par ailleurs sous exploitée.
- La logique de sélection est câblée. Ainsi, la fonction de sélecteur n'est contrôlée que par un état simple. Par exemple, par la mise sous tension de la boîte de commande ou par une commande fournie par le calculateur. De ce fait, certains modes dégradés ou de secours ne sont pas possibles.
- Ce type de réalisation ne permet en pratique la connexion que d'une seule application logicielle pour exploiter le poste radio en transmission de données. S'il y a un besoin de pouvoir avoir plusieurs applications logicielles différentes devant exploiter la radio, la solution conduit à un câblage complexe et coûteux, ainsi qu'à une masse embarquée conséquente. Dans le cas des aéronefs récents où la fonction d'application logicielle est portée par l'avionique, l'évolution est en pratique très coûteuse, car enrichir les fonctionnalités d'exploitation en transmission de données nécessite une reprise du logiciel de l'avionique, ce qui représente des coûts et des délais conséquents, le logiciel d'origine à modifier étant généralement partie prenante de la certification aéronautique de la plateforme.

Donc que ce soit pour les aéronefs d'ancienne génération sans bus numérique ou pour les aéronefs de nouvelle génération, l'architecture actuellement mise en œuvre pour numériser lesdits aéronefs présente les principaux défauts suivants, généralement rédhibitoires :
- des chantiers longs, avec beaucoup de reprise de câblage pour les aéronefs d'ancienne génération,
- des modifications logicielles impactant lourdement la navigabilité et donc coûteuses et longues à développer pour les aéronefs de nouvelle génération.

Le brevet américain US 6 741 870 B1 divulgue un dispositif d'interface tel que celui décrit dans le préambule de la revendication 1.

L'invention a pour objet un dispositif d'interface pour radio à télécommande numérique, le dispositif permettant la communication entre au moins un émetteur/récepteur radio et au moins deux dispositifs clients, le dispositif d'interface comprenant un module de sélection d'interface commandé par un algorithme de choix de sélection, une connexion physique permanente étant réalisée entre l'émetteur/récepteur radio et au moins deux dispositifs clients, caractérisé par le fait que l'émetteur/récepteur radio est doté d'une interface de télécommande numérique et par le fait que le dispositif d'interface comprend en outre un module de contrôle apte à superviser la liaison entre l'émetteur/récepteur radio et le dispositif client sélectionné et apte à gérer l'état courant de l'émetteur/récepteur radio et à commander les modifications d'état et de réinitialisation pour que l'émetteur/récepteur radio accepte de manière fiable et transparente le changement de dispositif client.

La machine implémentant le dispositif d'interface est typiquement une boîte de commande, c'est-à-dire l'appareil permettant la télécommande des fonctionnalités du poste radio. En effet les postes radio sont généralement, en aéronautique, des coffrets sans face avant, installés hors d'atteinte de l'équipage, pour des raisons d'encombrement. Il devient alors possible de raccorder à la boîte de commande différents matériels informatiques, comme une tablette numérique, et d'exploiter le poste radio en transmission de données, directement à partir de cette tablette.

Les dispositifs clients peuvent être de différents types. Il y aura nécessairement une interface locale résultant des actions directement effectuées par l'opérateur sur la boîte de commande.

D'autres dispositifs clients connectés à l'équipement peuvent être des interfaces numériques, dont les protocoles peuvent être aussi variés. On, citera à titre d'exemple :
- des protocoles numériques (USB, Bluetooth, Ethernet, WiFi, liaison série UART type RS232, 422 ou 485) standard, permettant à une application logicielle d'exploiter la radio en transmission de données. Cette application est typiquement supportée par un matériel ordinateur de type tablette numérique, ou calculateur aéronautique,
- des protocoles de bus numériques avioniques, de type MIL1553B ou ARINC 429, permettant à une application logicielle d'exploiter la radio en phonie ou en transmission de données. Cette application est typiquement supportée par un calculateur aéronautique faisant partie de l'avionique de l'aéronef
- des protocoles d'initialisation de la radio : protocoles de chargement de clés de chiffrement ou de plans de fréquence, type DS101, RS232, RS422, RS485,

Il est à noter que le protocole de télécommande numérique de la radio peut lui-même être d'un type quelconque dans les protocoles numériques ou de bus avionique cités supra. Avantageusement, le dispositif comprend la conversion d'un protocole d'interface physique en un autre.

Le dispositif d'interface comprend un module de contrôle apte à superviser la liaison entre la radio et le dispositif client sélectionné. Le module de contrôle s'assure notamment que les changements d'interface sélectionnée sont acceptés par la radio. Pour cela, le module de contrôle gère l'état courant de la radio, et commande les modifications d'état et de réinitialisation pour que la radio accepte de manière fiable et transparente le changement d'application utilisatrice. De la même manière, le module de contrôle modifie dynamiquement la façon dont il se déclare au poste radio pour permettre d'en activer les fonctions demandées, lorsque le protocole de télécommande utilisé par la radio n'active certaines fonctions que pour un type d'équipement déclaré.

Avantageusement l'algorithme de choix permet de déterminer quelle connexion doit être utilisée, en fonction des branchements et débranchements, ou des sollicitations de connexion reçues. Un exemple d'algorithme de choix peut utiliser de manière non exhaustive et possiblement cumulative :
- en priorité, la dernière connexion effectuée (priorité temporelle),
- les connexions selon une hiérarchie prédéterminée (priorité statique),
- la connexion choisie par l'opérateur, à partir des connexions possibles.

Par défaut, la connexion est effectuée avec l'interface locale de commande de l'équipement radio. Ainsi, la boîte de commande possède le comportement par défaut d'une boîte de commande non équipée de l'invention.

D'autres caractéristiques et avantages de l'invention apparaîtront dans la description qui suit d'un mode de réalisation préféré avec référence aux dessins annexés mais qui n'a aucun caractère limitatif.

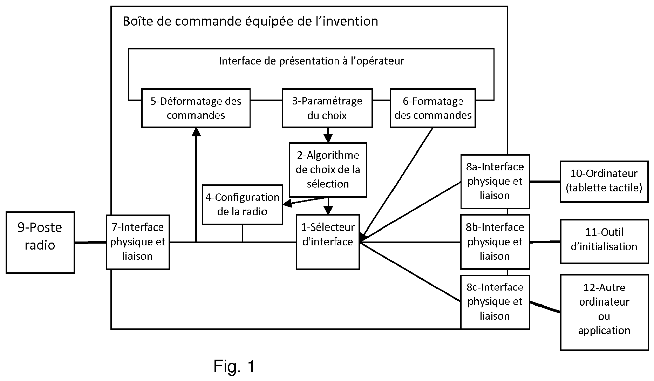

Fig. 1 est une représentation schématique des échanges effectués par le dispositif d'interface.

Nous allons maintenant décrire plus particulièrement la structure d'un dispositif selon l'invention.

Une réalisation pratique appliquée au poste radio PR4G est obtenue par remplacement de la boite de commande d'origine par une nouvelle boite de commande comportant le dispositif objet de la présente invention.

Au repos, la boîte de commande permet le contrôle du poste radio et son exploitation en phonie.

Par rapport à Fig.1 , on peut voir qu'un sélecteur d'interface 1 est connecté à une fonction de formatage des commandes 3 propre à la boîte de commande, car un algorithme de choix 2 n'a détecté aucune demande de connexion sur les différents ports externes (8a 8b 8c) de la boîte de commande.

L'interface de présentation à l'opérateur est typiquement constituée d'un clavier et d'un écran à cristaux liquides et permet de visualiser les différents états du poste. Cette interface dialogue avec la radio via les fonctions 5 et 6 de formatage et de déformatage des commandes. La visualisation des états du poste est offerte quel que soit l'état du sélecteur d'interface 1. Ceci permet de notifier à l'opérateur l'état réel du poste radio dans tous les cas de figure.

Lors de la connexion d'une application, par exemple, sur le port USB de la boîte de commande, l'algorithme 2 reconnaît cette commande comme prioritaire par rapport au contrôle local. Il commande alors à la fonction de sélection d'interface 1 de connecter la radio vers l'interface 8a USB. Simultanément, une commande est envoyée à la fonction 4 de configuration de la radio pour qu'elle soit dans un mode d'exploitation compatible de l'interface sélectionnée. Cet état est visualisé par l'opérateur par l'intermédiaire d'un symbole de connexion USB, complété par une flèche rotative animée signalant que la reconfiguration de la radio est en cours.

De nombreuses variantes sont possibles dans une réalisation comportant l'invention.

On notera notamment que le nombre et les types de protocoles utilisés pour raccorder des applications peuvent varier sans impact sur la possibilité de mettre en œuvre l'invention. On peut citer notamment USB, Bluetooth, Ethernet, port série, mais aussi des protocoles de bus avionique du type MIL-1553B ou ARINC 429.

La boîte de commande peut elle-même comporter des fonctions applicatives exploitant des transmissions de données, ou remplissant d'autres fonctionnalités. Par exemple, la boîte de commande peut comporter une fonction de présentation de situation tactique ou de communication par messages courts (Tchat), qui sont mises en œuvre par défaut, sur décision opérateur ou en complément d'une connexion externe choisie par la fonction de sélecteur d'interface. Un autre exemple de fonction applicative pouvant être implémentée dans la boîte de commande est une fonction d'initialisation de la radio : en équipant la boîte de commande d'un connecteur de chargement, la détection du raccordement d'un dispositif de chargement par la fonction de sélecteur d'interface 1 de l'invention provoque la réinitialisation de la liaison de télécommande avec la radio dans la configuration adéquate par la fonction de configuration de la radio 4, permettant alors le chargement dans la radio des données d'initialisation contenues dans le dispositif de chargement (par exemple, fréquences, clés de chiffrement).

Il est par ailleurs possible qu'il soit pertinent qu'une même boîte permette la commande de plusieurs postes radios, conduisant à utiliser une matrice de connexion dans la fonction de sélecteur d'interface. Ainsi, une même boîte de commande dotée de 2 (ou, par exemple, respectivement 4) instances de la fonction d'interface physique et liaison 7 avec la radio et autant d'instances de déformatage des commandes 5 et de configuration de la radio 4 permettrait d'exploiter simultanément 2 (respectivement 4) postes radios. Ainsi, l'opérateur peut avec une même interface et un même équipement, soit exploiter la radio de son choix, ou exploiter simultanément plusieurs radios à partir d'une seule connexion. Il est à noter que les radios peuvent être de types différents, comme par exemple une radio VHF et un poste radio de communication par satellite.

Dans un tel cas, on peut également prévoir que la boîte de commande permette le relayage automatique des informations reçues d'un poste radio vers un autre poste radio, et ce directement, c'est-à-dire sans aucune application logicielle externe.

Tant en rétrofit d'anciens aéronefs que pour la conception de nouveaux aéronefs, le dispositif a de nombreux avantages et permet une simplification de l'architecture de l'aéronef et des câblages, avec un gain en poids et en complexité. Dans le cas des aéronefs de nouvelle génération possédant un bus numérique (bus avionique), ce bus numérique peut constituer l'une des applications logicielles connectables à la boîte de commande.

## Revendications

1. Dispositif d'interface pour radio à télécommande numérique, le dispositif permettant la communication entre au moins un émetteur/récepteur radio (9) doté d'une interface de télécommande numérique et au moins deux dispositifs clients (10, 11, 12), le dispositif d'interface comprenant un module de sélection d'interface (1) commandé par un algorithme de choix de sélection (2), une connexion physique permanente étant réalisée entre l'émetteur/récepteur radio (9) et au moins deux dispositifs clients (10, 11, 12), **caractérisé par le fait que** le dispositif d'interface comprend en outre un module de contrôle apte à superviser la liaison entre l'émetteur/récepteur radio (9) et le dispositif client (10, 11, 12) sélectionné et apte à gérer l'état courant de l'émetteur/récepteur radio (9) et à commander les modifications d'état et de réinitialisation pour que l'émetteur/récepteur radio (9) accepte de manière fiable et transparente le changement de dispositif client (10 ,11, 12).

2. Dispositif d'interface selon la revendication 1, **caractérisé en ce que** l'algorithme de choix (2) utilise en priorité la dernière connexion effectuée.

3. Dispositif d'interface selon l'une quelconque des revendications précédentes, **caractérisé en ce que** l'algorithme de choix (2) utilise en priorité les connexions selon une hiérarchie prédéterminée.

4. Dispositif d'interface selon l'une quelconque des revendications précédentes, **caractérisé en ce que** l'algorithme de choix (2) utilise en priorité la connexion choisie par l'opérateur, à partir des connexions possibles.

## Patentansprüche

1. Schnittstellenvorrichtung für ein Radio mit digitaler Fernsteuerung, wobei die Vorrichtung die Kommunikation zwischen mindestens einem Funktransceiver (9) mit einer Schnittstelle für eine digitale Fernsteuerung und mindestens zwei Client-Geräten (10, 11, 12) ermöglicht, wobei die Schnittstellenvorrichtung ein Schnittstellenauswahlmodul (1) umfasst, das durch einen Angebotsauswahlalgorithmus (2) gesteuert wird, wobei eine permanente physikalische Verbindung zwischen dem Funkstransceiver (9) und den mindestens zwei Client-Geräten (10, 11, 12) erfolgt, **dadurch gekennzeichnet, dass** die Schnittstelleneinrichtung ferner ein Steuermodul umfasst, das in der Lage ist, die Verbindung zwischen dem Funkstransceiver (9) und dem ausgewählten Client-Gerät (10, 11, 12) zu überwachen, und das in der Lage ist, den aktuellen Status des Funkstransceiver (9) zu verwalten und Status- und Reset-Änderungen zu steuern, so dass der Funktransceiver (9) zuverlässig und transparent die Änderung des Client-Geräts (10, 11, 12) akzeptiert

2. Schnittstelleneinrichtung nach Anspruch 1, **dadurch gekennzeichnet, dass** der Auswahlalgorithmus (2) vorrangig die zuletzt hergestellte Verbindung verwendet.

3. Schnittstelleneinrichtung nach einem der vorhergehenden Ansprüche, **dadurch gekennzeichnet, dass** der Auswahlalgorithmus (2) vorrangig die Verbindungen gemäß einer vorgegebenen Hierarchie verwendet.

4. Schnittstelleneinrichtung nach einem der vorhergehenden Ansprüche, **dadurch gekennzeichnet, dass** der Auswahlalgorithmus (2) vorrangig die vom Bediener ausgewählte Verbindung aus den möglichen Verbindungen verwendet.

## Claims

1. An interface device for a radio with digital remote control, the device enabling communication between at least one radio transceiver (9) with a digital remote control interface and at least two client devices (10, 11, 12), the interface device comprising an interface selection module (1) controlled by a selection choice algorithm (2), a permanent physical connection being made between the radio transceiver (9) and at least two client devices (10, 11, 12), **characterized in that** the interface device further comprises a control module which is able to supervise the connection between the radio transceiver (9) and the selected client device (10, 11, 12) and which is able to manage the current status of the radio transceiver (9) and to control status and reset changes so that the radio transceiver (9) reliably and transparently accepts the change of client device (10, 11, 12) .

2. Interface device according to claim 1, **characterized in that** the choice algorithm (2) uses as a priority the last connection made.

3. Interface device according to any of the preceding claims, **characterized in that** the choice algorithm (2) uses as a priority the connections according to a predetermined hierarchy.

4. Interface device according to any of the preceding claims, **characterized in that** the choice algorithm (2) uses as a priority the connection chosen by the operator, from the possible connections.
